# EUROPÄISCHE PATENTANMELDUNG

(11) **EP 3 382 616 A1**
(43) Veröffentlichungstag der Anmeldung: **03.10.2018**
(21) Anmeldenummer: 17164205.1
(22) Anmeldetag: 31.03.2017
(51) Int. Cl.: G06Q 10/06, G06Q 99/00

(54) **VERFAHREN UND VORRICHTUNG ZUM RECHNERGESTÜTZTEN BEREITSTELLEN EINES SICHERHEITSGESCHÜTZTEN DIGITALEN ZWILLINGS**

(71) Anmelder: Siemens Aktiengesellschaft, 80333 München (DE)
(72) Erfinder: Falk, Rainer, 85586 Poing (DE)

(57) **Zusammenfassung**

Verfahren und Vorrichtung zum rechnergestützten Bereitstellen eines sicherheitsgeschützten digitalen Zwillings

Die Erfindung realisiert ein Verfahren zum rechnergestützten Erstellen eines sicherheitsgeschützten digitalen Zwillings mit folgenden Verfahrensschritten. Bereitstellen (110) zumindest eines ausgewählten Teils von Daten eines primären digitalen Zwillings. Speichern (120) von Transkationen, wobei die Transaktionen den ausgewählten Teil der Daten umfassen und/oder erste Prüfsummen für den ausgewählten Teil der Daten berechnet werden und die Transaktionen die ersten Prüfsummen umfassen. Erstellen (130) des sicherheitsgeschützten digitalen Zwillings durch ein Erzeugen von Gliedern einer Blockkette, wobei die Glieder die Transkationen umfassen und die Glieder miteinander zur der Blockkette verkettet werden.

## Beschreibung

Die Erfindung bezieht sich auf ein Verfahren und eine Vorrichtung zum rechnergestützten Bereitstellen eines sicherheitsgeschützten digitalen Zwillings.

Die Technologie von Blockketten (engl. Blockchains) bzw. "Distributed Ledgers" ist aktuell ein intensiv diskutierte Technologie. Neben Anwendungen für dezentrale Bezahlsysteme (z.B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Eine Aufgabe der vorliegenden Erfindung ist es, ein Verfahren und eine Vorrichtung zum rechnergestützten Bereitstellen eines sicherheitsgeschützten digitalen Zwillings bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß eines ersten Aspekts betrifft die Erfindung ein Verfahren zum rechnergestützten Erstellen eines sicherheitsgeschützten digitalen Zwillings mit folgenden Verfahrensschritten:
- Bereitstellen eines ausgewählten Teils von Daten eines primären digitalen Zwillings;
- Speichern von Transkationen, wobei
   - die Transaktionen den ausgewählten Teil der Daten umfassen und/oder
   - erste Prüfsummen für den ausgewählten Teil der Daten berechnet werden und die Transaktionen die erste Prüfsummen umfassen;
- Erstellen des sicherheitsgeschützten digitalen Zwillings durch ein Erzeugen von Gliedern einer Blockkette, wobei
   - die Glieder die Transkationen umfassen,
   - die Glieder miteinander zur der Blockkette verkettet werden.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Laden oder ein Speichern, beispielsweise des primären digitalen Zwillings, auf oder von einem Speichermodul verstanden werden.

Unter einer "Prüfsumme", beispielsweise die erste Prüfsumme, eine zweite Prüfsumme, eine Knoten-Prüfsumme, eine Transaktions-Prüfsumme oder eine Verkettungsprüfsumme, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine der Transaktionen und/oder einem Glied-Header gebildet oder berechnet werden. Bei einer Prüfsumme kann es sich insbesondere um eine Prüfsumme/n oder Hashwert/e eines Hash-Baumes (z. B. Merkle-Baum, Patricia-Baum) handeln. Weiterhin kann darunter insbesondere auch eine digitale Signatur oder ein kryptographischer Nachrichtenauthentisierungscode verstanden werden.

Unter einer "ersten Prüfsumme" kann im Zusammenhang mit der Erfindung eine Prüfsumme verstanden werden, die beispielsweise über die Daten(sätze) einer Transaktion berechnet wird. Anstelle der Daten, z. B. der ausgewählte Teil der Daten, kann beispielsweise eine Transaktion nur die Prüfsumme - genauer die entsprechende zugehörige erste Prüfsumme - für diese Daten umfassen. Die entsprechenden Daten können beispielsweise dann in einer weiteren Transaktion eines weiteren Gliedes bereitgestellt werden. Es ist beispielsweise aber auch denkbar, dass diese Daten über einen anderen Kommunikationskanal bereitgestellt werden. Ein Knoten kann dann beispielsweise die Integrität/Authentizität der Daten mittels der ersten Prüfsumme aus der Blockkette prüfen. Auch kann beispielsweise zusätzlich zu der ersten Prüfsumme eine Zusatzdatensatz in den Transaktionen abgelegt sein, der insbesondere einen Speicherort angibt, wo die Daten abgerufen werden können. Das ist insbesondere dahingehend vorteilhaft, um eine Datengröße der Blockkette möglichst gering zu halten. Zusätzlich kann beispielsweise eine Berechnung einer Transaktions-Prüfsumme beschleunigt werden, da hier bereits Prüfsummen vorliegen und diese gleich als Blätter z. B. eines Merkle-Baumes verwendet werden können. Dabei kann insbesondere darauf verzichtet werden, eine separate Prüfsumme über den Zusatzdatensatz zu bilden.

Unter "Transaktions-Prüfsumme" kann im Zusammenhang mit der Erfindung eine Prüfsumme verstanden werden, die insbesondere über die jeweiligen Transaktionen eines der jeweiligen Glieder und/oder vorhergehende Glied/Vorgänger-Glied eines Gliedes der Blockkette gebildet werden. Zusätzlich oder alternativ kann die Transaktions-Prüfsumme insbesondere auch über Transaktionen eines vorhergehenden Gliedes/Vorgänger-Gliedes des Gliedes gebildet worden sein. Die Transaktions-Prüfsumme kann dabei insbesondere auch mittels eines Hash-Baumes, beispielsweise einem Merkle Baum [1] oder einem Patricia-Baum, realisiert werden, wobei die Transaktions-Prüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert, wobei insbesondere die weiteren Prüfsummen Blätter im Merkle-Baum bzw. Patricia-Baum sind. Die Transaktions-Prüfsumme kann damit beispielsweise die Transaktionen absichern, indem die Wurzel-Prüfsumme aus den weiteren Prüfsummen gebildet wird. Die Transaktions-Prüfsumme kann insbesondere für Transaktionen eines ersten Gliedes der Glieder berechnet werden. Insbesondere kann eine solche Transaktions-Prüfsumme in ein nachfolgendes Glied des ersten Gliedes eingehen, um dieses nachfolgende Glied beispielsweise mit ihren vorhergehenden Gliedern (z. B. das erste Glied) zu verketten und insbesondere damit eine Integrität der Blockkette prüfbar zu machen.

Unter einer "Verkettungsprüfsumme" kann im Zusammenhang mit der Erfindung eine Prüfsumme verstanden werden, die insbesondere für ein jeweiliges Glied der Blockkette das vorhergehende Glied der Blockkette angibt bzw. referenziert (in der Fachsprache insbesondere häufig als "previous block hash" bezeichnet) [1]. Als Verkettungsprüfsumme kann beispielsweise die Transaktions-Prüfsumme eines Gliedes verwendet werden, um ein neues Glied mit einem Glied der Blockkette zu verketten. Es ist beispielsweise aber auch möglich, dass eine Prüfsumme über einen Header des vorhergehenden Gliedes oder über das gesamte vorhergehende Glied gebildet wird und als Verkettungsprüfsumme verwendet wird. Ein jeweiliges Glied der Blockkette umfasst vorzugsweise jeweils eine Verkettungsprüfsumme, die für ein vorhergehendes Glied des jeweiligen Gliedes berechnet wurde.

Unter "Verketten der/von Gliedern einer Blockkette" kann im Zusammenhang mit der Erfindung beispielsweise verstanden werden, dass Glieder jeweils eine Information (z. B. Verkettungsprüfsumme) umfassen, die auf ein anderes Glied oder mehrere andere Glieder der Blockkette verweisen bzw. diese referenzieren [1].

Unter "Einfügen in die Blockkette" und dergleichen kann im Zusammenhang mit der Erfindung beispielsweise verstanden werden, dass insbesondere eine Transaktion bzw. die Transaktionen oder ein Glied mit seinen Transaktionen an einen oder mehrere Knoten einer Blockkette übermittelt werden. Werden diese Transaktionen beispielsweise erfolgreich validiert (z. B. durch den/die Knoten), werden diese Transaktionen insbesondere als neues Glied/er mit mindestens einem vorhandenen Glied der Blockkette verkettet [1]. Insbesondere kann dieses Validieren und/oder Verketten durch einen vertrauenswürdigen Knoten (z. B. einem Mining Node oder einer Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Glied hinterlegen, um insbesondere eine Identifizierbarkeit des Erstellers des Gliedes zu ermöglichen und/oder eine Identifizierbarkeit des Knotens zu ermöglichen. Dabei gibt diese Knoten-Prüfsumme an, welcher Knoten beispielsweise das entsprechende Glied mit mindestens einem anderen Glied der Blockkette verkettet hat.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Gliedes einer Bockkette (engl. Blockchain) verstanden werden. Ein Transaktionsdatensatz bzw. eine Transkation kann einen Programmcode umfassen, der insbesondere einen Smart Contract realisiert. Unter einem "Transaktionsdatensatz" können im Zusammenhang mit der Erfindung beispielsweise auch eine Transkation eines Gliedes einer Blockkette verstanden werden.

Unter einem "Programmcode" können im Zusammenhang mit der Erfindung beispielsweise Steuerungsbefehle, Programmbefehle, oder Steuerungsanweisungen verstanden werden, die insbesondere in einer Transaktion gespeichert sind.

Unter einem "Smart Contract" kann im Zusammenhang mit der Erfindung beispielsweise ein ausführbarer Programmcode verstanden werden. Der Programmcode ist insbesondere auf einer virtuellen Maschine ausführbar.

Unter "Speichern von Transaktionen" kann im Zusammenhang mit der Erfindung beispielsweise ein Speichern von Daten (z. B. des ausgewählten Teils der Daten usw.) in einer Transaktion bzw. in einem Transaktionsdatensatz verstanden werden. Es ist beispielsweise auch denkbar, dass nicht die Daten direkt gespeichert werden, sondern nur eine Prüfsumme (z. B. die erste Prüfsumme) der entsprechenden Daten in der Transaktion gespeichert werden.

Unter "Proof-of-Work-Nachweis" kann im Zusammenhang mit der Erfindung beispielsweise ein Lösen einer rechenintensiven Aufgabe verstanden werden, die insbesondere abhängig vom Glied-Inhalt/Inhalt eines ersten Transaktionsdatensatzes zu lösen ist [1]. Eine solche rechenintensive Aufgabe wird beispielsweise auch als kryptographisches Puzzle bezeichnet.

Unter "Glied" kann im Zusammenhang mit der Erfindung beispielsweise ein Block einer Blockkette verstanden werden, das insbesondere als Datenstruktur realisiert ist und vorzugsweise jeweils eine der Transaktionen oder mehrere der Transaktionen umfasst. Ein Glied kann beispielsweise Angaben zur Größe (Datengröße in Byte) des Gliedes, einen Glied-Header (engl. Blockheader), einen Transaktionszähler und eine oder mehrere Transaktionen umfassen [1]. Der Glied-Header kann beispielsweise eine Version, eine Verkettungsprüfsumme, eine Transkations-Prüfsumme, einen Zeitstempel, einen Proof-of-Work Nachweis und eine Nonce (Einmalwert, Zufallswert oder Zähler der für den Proof-of-Work Nachweis verwendet wird) umfassen [1].

Unter "Nonce" kann im Zusammenhang mit der Erfindung beispielsweise eine kryptographische Nonce verstanden werden (Abkürzung für: "used only once" [2] oder "number used once" [3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehender Glieder eines (ersten) Gliedes der Blockkette" kann im Zusammenhang mit der Erfindung beispielsweise nur das Glied der Blockkette verstanden werden, das insbesondere einem (ersten) Glied direkt vorhergeht. Alternativ können unter "vorhergehender Glieder eines (ersten) Gliedes der Blockkette" insbesondere auch alle Glieder der Blockkette verstanden werden, die dem ersten Glied vorhergehen. Hierdurch kann beispielsweise die Verkettungsprüfsumme oder die Transaktions-Prüfsumme insbesondere nur über das dem ersten Glied direkt vorhergehende Glied (bzw. deren Transaktionen) oder über alle dem ersten Glied vorhergehenden Glieder (bzw. deren Transaktionen) gebildet werden.

Unter einem "Blockketten-Knoten", "Knoten", "Knoten einer Blockkette" und dergleichen, können im Zusammenhang mit der Erfindung beispielsweise Geräte (z. B. Feldgeräte), Rechner, Smart-Phones, Clients oder Teilnehmer verstanden werden, die Operationen mit einer Blockkette durchführen [1]. Solche Knoten können beispielsweise Transaktionen einer Blockkette bzw. deren Glieder ausführen oder neue Glieder mit neuen Transaktionen in die Blockkette mittels neuer Glieder einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten der über zusätzliche Sicherheitsmaßnahmen verfügt (z. B. Firewalls, Zugangsbeschränkungen zum Knoten oder ähnliches) handeln, um eine Manipulation des Knotens zu verhindern. Alternativ oder zusätzlich kann beispielsweise ein vertrauenswürdiger Knoten beim Verketten eines neuen Gliedes mit der Blockkette, eine zweite Prüfsumme (z. B. eine digitale Signatur oder ein Zertifikat) in dem neuen Glied speichern. Damit kann insbesondere ein Nachweis bereitgestellt werden, der angibt, dass das Glied von einem bestimmten Knoten eingefügt wurde bzw. seine Herkunft angibt.

Unter einem "Rechner" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer der Blockkette sind (also keine Operationen mit der Blockkette durchführen oder diese nur abfragen, ohne jedoch Transaktionen durchzuführen, Glieder einfügen oder Proof-of-Work-Nachweise berechnen), verstanden werden. Alternativ kann insbesondere auch unter einem Rechner ein Knoten einer Blockkette verstanden werden.

Unter "digitalen Zwilling" (engl. Digital Twin) kann im Zusammenhang mit der Erfindung beispielsweise ein digitales Abbild, insbesondere in Form eines Datenmodells oder einer Datenstruktur, eines realen Produkts, (technischen) Gegenstandes oder eines (physikalischen) Objektes verstanden werden. Dies sind z. B. (elektrische /elektromechanische /elektronische) Geräte, Windturbinen, oder Großanlagen wie Offshore-Plattformen. Insbesondere ist der Begriff digitaler Zwilling auch in den folgenden Patentanmeldungen erläutert: WO2016/141998 oder PCT/EP2016/064785. Insbesondere kann ein digitaler Zwilling anhand von Daten des Gegenstandes der abgebildet wird, aktualisiert werden. Diese entsprechenden Daten können beispielsweise durch Sensoren erfasst werden und dann den digitalen Zwilling aktualisieren. Dies kann beispielsweise in Echtzeit, periodisch, manuell gesteuert oder zu vorgegebenen Zeitpunkten erfolgen. Unter einem primären digitalen Zwilling kann beispielsweise eine sehr detaillierte digitale Abbildung eines Gegenstandes verstanden werden, die insbesondere eine große Datenmenge umfasst und beispielsweise hunderte oder tausende Datensätze umfasst. Insbesondere kann ein digitaler Zwilling ein Steuermodul (z. B. Steuersoftware) oder Steuersystem (z. B. ein Überwachungssystem des Gegenstandes, das durch den digitalen Zwilling abgebildet wird) umfassen, sodass beispielsweise der digitale Zwilling Steueraktionen (z. B. kann der primäre digitale Zwilling Transaktionen mit aktualisierten Daten in die Blockkette einfügen oder seine Datenintegrität anhand der Blockkette selbständig prüfen) durchführen kann.

Unter "Geräteattestierungsinformation" kann im Zusammenhang mit der Erfindung beispielsweise eine kodierte Datenstruktur (z.B. Textdatei, XML, JSON, ASN.1) verstanden werden, die eine Information über das Gerät kryptographisch geschützt bestätigt. Die Geräteattestierungsinformation-Datenstruktur wird beispielsweise durch eine kryptographische Prüfsumme, insbesondere eine digitale Signatur oder ein Nachrichtenauthentisierungscode, geschützt. Diese wird insbesondere durch das Gerät unter Verwendung eines kryptographischen Schlüssels (z. B. für asymmetrische oder symmetrische kryptographische Verfahren) gebildet. Diese so durch das Gerät gebildete Geräteattestierungsinformation-Datenstruktur kann insbesondere nur durch das Gerät selbst gebildet werden und nicht durch Dritte unbemerkt manipuliert werden. Beispielsweise ist ausschließlich dem Gerät ein privater Schlüssel (z. B. bei einem asymmetrischen kryptographischen Verfahren) zum Erstellen der kryptographischen Prüfsumme (z. B. der digitalen Signatur) bekannt. Spezifische Beispiele für Informationen eines Gerätes sind insbesondere Modell (Hersteller, Hardware-Revision), Firmware-Version, geladene Software-Module (z.B. Bezeichner, Hash-Wert, Versionsnummer), aktuelle Uhrzeit eines Zeitgebers des Gerätes, Status eines Watchdogs des Geräts (d.h. einer Überwachungsvorrichtung des Gerätes), Konfigurationsstand, Information über durchgeführte Selbsttests, Information über Bootvorgang oder eine Kombination aus diesen Informationen.

Das Verfahren ist dahingehend vorteilhaft um insbesondere durch eine dezentrale Blockketten-Infrastruktur einen vertrauenswürdigen/sicherheitsgeschützten digitalen Zwilling bereitzustellen. Hierdurch wird vorzugsweise eine dezentrale sicherheitsgeschützte Verteilung der Daten des sicherheitsgeschützten digitalen Zwillings/des ausgewählten Teils der Daten realisiert. Insbesondere wird der sicherheitsgeschützte digitale Zwilling durch die Blockkette manipulationsgeschützt und kann einfach zugänglich gemacht werden. Insbesondere können in einem konventionellen digitalen Zwilling (z. B. dem primären digitalen Zwilling) dagegen weitere Daten, insbesondere mit hohem Datenvolumen und hoher Änderungshäufigkeit, hinterlegt werden. Kommt es beispielsweise zu einer Änderung eines Datensatzes des ausgewählten Teils der Daten im primären digitalen Zwilling, so kann beispielsweise mittels des primären digitalen Zwillings und eines Steuermoduls (z. B. eine Steuersoftware) eine neue Transaktion in die Blockkette eingefügt werden, die insbesondere den geänderten Datensatz umfasst. Hierdurch wird insbesondere eine Konsistenz der beiden digitalen Zwillinge (des primären digitalen Zwillings und des sicherheitsgeschützten digitalen Zwillings) sichergestellt. Insbesondere ist es auch denkbar, dass der ausgewählte Teil der Daten den gesamten Umfang des primären digitalen Zwillings umfasst oder den primären digitalen Zwilling nur partiell umfasst. Insbesondere kann der sicherheitsgeschützte digitale Zwilling dann bereitgestellt werden, sodass dieser insbesondere an Rechner übermittelt werden kann oder von Rechnern abgerufen werden kann.

Bei einer ersten Ausführungsform des Verfahrens werden die Glieder über eine kryptographische Hashfunktion miteinander verkettet.

Bei einer weiteren Ausführungsform des Verfahrens werden ein Datum der ausgewählten Daten, ein Teil der ausgewählten Daten oder alle ausgewählten Daten der Transaktionen jeweils aktualisiert, indem mit mindestens einem der anderen Glieder der Blockkette ein weiteres Glied mit mindestens einer weiteren Transkation mit entsprechend aktualisierten Daten verkettet wird.

Das Verfahren ist dahingehend vorteilhaft um insbesondere die Konsistenz der beiden digitalen Zwillinge zu gewährleisten.

Bei einer weiteren Ausführungsform des Verfahrens wird eine Prüfung der Integrität durch den primären digitalen Zwilling selbst gesteuert und/oder durch Systemkomponenten gesteuert und/oder durch ein physikalisches Objekt gesteuert, das der primäre digitale Zwilling abbildet.

Das Verfahren ist dahingehend vorteilhaft um insbesondere die Konsistenzprüfung von unterschiedlichen Stellen aus durchzuführen. Diese Prüfungen können insbesondere zu vorgegebenen Zeitpunkten, periodisch, manuell gesteuert oder durch ein Serviceintervall durchgeführt werden. Insbesondere können insbesondere unter Systemkomponenten Netzwerkkomponenten wie Gateways, Firewalls oder Intrusion-Detektion-Systeme verstanden werden.

Bei einer weiteren Ausführungsform des Verfahrens überträgt ein physikalisches Objekt, das der primäre digitale Zwilling abbildet, eine Geräteattestierungsinformation an den primären digitalen Zwilling. Der primäre digitale Zwilling fügt die Geräteattestierungsinformation als erste weitere Transaktion eines ersten weiteren Gliedes in die Blockkette ein und dieses erste weitere Glied wird mit mindestens einem der anderen Glieder der Blockkette verkettet.

Das Verfahren ist dahingehend vorteilhaft um insbesondere sicherheitsgeschützt Geräteattestierungsinformation bereitzustellen.

Bei einer weiteren Ausführungsform des Verfahrens wird die Geräteattestierungsinformation mit einer zweiten Prüfsumme geschützt und eine zweite weitere Transaktion eines zweiten weiteren Gliedes oder die erste weitere Transaktion umfassen die erste kryptographische Prüfsumme.

Das Verfahren ist dahingehend vorteilhaft um insbesondere die Geräteattestierungsinformation mit der zweiten Prüfsumme (z. B. eine digitale Signatur) zusätzlich abzusichern und eine Identifizierung des Knotens zu ermöglichen, der diese Information eingestellt hat.

Gemäß eines weiteren Aspekts betrifft die Erfindung ein Vorrichtung zum rechnergestützten Erstellen eines sicherheitsgeschützten digitalen Zwillings aufweisend:
- ein Bereitstellungsmodul zum Bereitstellen zumindest eines ausgewählten Teils von Daten eines primären digitalen Zwillings;
- ein Speichermodul zum Speichern von Transaktionen, wobei
   - die Transaktionen den ausgewählten Teil der Daten umfassen und/oder
   - erste Prüfsummen für den ausgewählten Teil der Daten berechnet werden und die Transaktionen die erste Prüfsummen umfassen;
- ein Erstellungsmodul zum Erstellen des sicherheitsgeschützten digitalen Zwillings durch ein Erzeugen von Gliedern einer Blockkette, wobei
   - die Glieder die Transkationen umfassen,
   - die Glieder miteinander zur der Blockkette verkettet werden.

Bei einer weiteren Ausführungsform der Vorrichtung umfasst die Vorrichtung ein Übermittlungsmodul zum Übermitteln des sicherheitsgeschützten digitalen Zwillings.

Das Verfahren ist dahingehend vorteilhaft um insbesondere den sicherheitsgeschützten digitalen Zwilling an Knoten oder Rechner außerhalb der Blockkette zu übermitteln oder den sicherheitsgeschützten digitalen Zwilling von der Vorrichtung oder Knoten abzufragen. Das Übermitteln kann beispielsweise verbindungsorientiert (z. B. TCP/IP basierend), verbindungslos (z. B. UDP basierend) oder broadcast/multicast-basierend erfolgen.

Bei einer weiteren Ausführungsform der Vorrichtung umfasst die Vorrichtung zumindest ein weiteres Modul oder mehrere weitere Module zur Durchführung des erfindungsgemäßen Verfahrens (oder einer seiner Ausführungsformen) zum rechnergestützten Erstellen des sicherheitsgeschützten digitalen Zwillings.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Vorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Vorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein zweites Ausführungsbeispiel der Erfindung;
- Fig. 3: ein drittes Ausführungsbeispiel der Erfindung;
- Fig. 4: ein viertes Ausführungsbeispiel der Erfindung;
- Fig. 5: ein fünftes Ausführungsbeispiel der Erfindung als Vorrichtung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

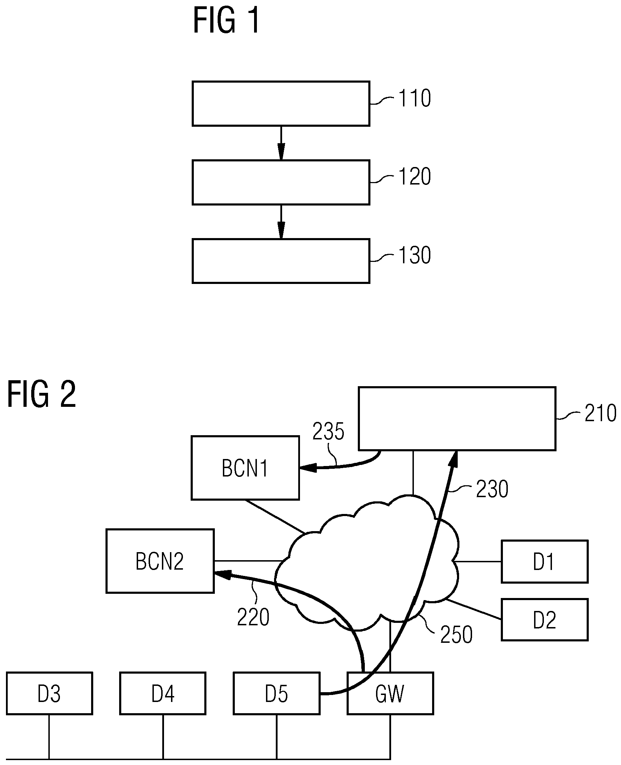

Die Fig. 1 zeigt ein erstes Ausführungsbeispiel der Erfindung als ein Ablaufdiagramm des erfindungsgemäßen Verfahrens zum rechnergestützten Erstellen eines sicherheitsgeschützten digitalen Zwillings.

Das Verfahren umfasst einen ersten Verfahrensschritt zum Bereitstellen 110 zumindest eines ausgewählten Teils von Daten eines primären digitalen Zwillings. Hier können beispielsweise sicherheitskritische Daten des primären digitalen Zwillings ausgewählt werden, bei denen es wichtig ist deren Integrität zu schützen.

Das Verfahren umfasst einen zweiten Verfahrensschritt zum Speichern 120 von Transaktionen. Die Transaktionen umfassen dabei den ausgewählten Teil der Daten, wobei dies auf unterschiedliche Weise realisiert werden kann. Es ist denkbar, dass jeweils eine der Transaktionen eine oder mehrere der Datensätze des ausgewählten Teils der Daten umfasst - also in der entsprechenden Transaktion gespeichert wird. Alternativ können die Transaktionen erste Prüfsummen umfassen, die für die für Datensätze des ausgewählten Teils der Daten berechnet wurden. In dieser Variante umfasst eine der Transaktionen eine oder mehrere erste Prüfsummen die jeweils für einen der Datensätze des ausgewählten Teils der Daten berechnet wurden. Zusätzlich zur den ersten Prüfsummen können die Transaktionen beispielsweise eine Angabe (z. B. eine Internetadresse oder einen Speicherort auf einem Datenträger) umfassen, wo ein Rechner oder ein Knoten die entsprechenden Daten(sätze) des ausgewählten Teils der Daten abrufen kann. Es ist beispielsweise auch denkbar, dass diese Angabe Rechnern und Knoten allgemein bekannt gemacht wird (z. B. über eine Rechnerkonfiguration oder Nutzerprofile).

Das Verfahren umfasst einen dritten Verfahrensschritt zum Erstellen 130 des sicherheitsgeschützten digitalen Zwillings durch ein Erzeugen von Gliedern einer Blockkette, wobei die Glieder die Transkationen umfassen und die Glieder miteinander zur der Blockkette verkettet werden.

Hierdurch kann beispielsweise eine Vorrichtung (z. B. ein Steuermodul oder Steuergerät mit einem primären digitalen Zwilling) die Transaktionen mit dem sicherheitsgeschützten digitalen Zwilling in die Blockkette einfügen bzw. die entsprechenden Glieder mit der/den Transaktionen mit mindestens einem Glied der Blockkette verketten.

Mit anderen Worten, können mit der Erfindung insbesondere Informationen eines digitalen Zwillings sicherheitsgeschützt bereitgestellt werden.

Ein konventioneller digitaler Zwilling stellt Informationen zu einem physikalischen Objekt in digitaler Form bereit. Heute liegen diese Daten eines solchen Objekts auf speziellen Servern, z. B. des Herstellers einer Produkts oder dem Betreiber einer Anlage. Dies hat jedoch den Nachteil, dass die Daten nur eingeschränkt zugänglich sind, und dass die gespeicherten Daten verfälscht werden können.

Mit dem erfindungsgemäßen Verfahren wird ein digitaler Zwilling zumindest teilweise oder nur teilweise in einer Blockkette repliziert. Dies ist vorteilhaft, da nicht die vollständigen Daten des primären digitalen Zwillings in der frei zugänglichen Blockkette vorliegen. Dies wäre insbesondere weder praktikabel (Datenvolumen) noch wäre es erwünscht (vertrauliche, geschäftskritische Daten).

Der sicherheitsgeschützte digitale Zwilling umfasst somit insbesondere eine Teilmenge der Information des vollständigen primären digitalen Zwillings. Dieser sicherheitsgeschützte digitale Zwilling ist jedoch frei oder zumindest relativ einfach von unterschiedlichen Nutzern zugreifbar. Die in der Blockkette hinterlegten Daten bzw. Datensätze des primären digitalen Zwillings sind dabei beispielsweise vorverarbeitet (z.B. gefiltert, komprimiert, analysiert).

Die Daten(sätze) des sicherheitsgeschützten digitalen Zwillings können durch den primären digitalen Zwilling beispielsweise aktualisiert werden. Dazu bildet der primäre digitale Zwilling eine Transaktion, die beispielsweise gefilterte und ggf. vorverarbeitete Daten des physikalischen Objekts umfasst. Die Transaktionen werden insbesondere in einer Blockkette eingefügt bzw. ein Glied mit einer entsprechenden Transkation erzeugt und mit mindestens einem Glied der Blockkette verkettet.

Mittels der Blockkette wird somit beispielsweise eine Teilmenge des primären digitalen Zwillings (bzw. seiner Datensätze) manipulationsgeschützt und frei oder zumindest freier zugänglich bereitgestellt.

Der primäre digitale Zwilling kann z. B. durch einen Projektierungsserver oder durch ein Cloud-basiertes IoT-Backend (Siemens Mindsphere, Microsoft Azure) realisiert sein.
Der primäre digitale Zwilling kann insbesondere weiterhin seine Daten auf Konsistenz unter Verwendung der in dem sicherheitsgeschützten digitalen Zwilling manipulationsgeschützt hinterlegten Daten prüfen. Dadurch können Manipulationen und Inkonsistenzen der Daten des primären digitalen Zwillings erkannt und ggf. korrigiert werden.

Es ist in einer Variante jedoch auch möglich, dass dies auf einem Gateway erfolgt. Ein Gateway, das Daten des Gerätes an primären digitalen Zwilling z. B. eines Backend überträgt, kann diese Daten(sätze) bearbeiten bzw. vorverarbeiten und davon abhängig Transaktionen bilden, die verwendet werden um den sicherheitsgeschützten digitalen Zwilling zu erzeugen, also insbesondere diese Daten(sätze) in die Blockkette einfügt bzw. verkettet.

In einer weiteren Variante kann ein physikalisches Objekt selbst seine in einer Blockkette hinterlegten Daten seines ihm zugeordneten sicherheitsgeschützten digitalen Zwillings aktualisieren. Diese Variante hat den Vorteil, dass sie unabhängig von einem konventionellen digitalen Zwilling nutzbar und aktualisierbar ist.

In einer weiteren Variante, fügen mehrere Quellen (primärer digitaler Zwilling, Gateway, Gerät, das durch den primären digitalen Zwilling abgebildet wird) jeweils Transaktionen mit Daten für den sicherheitsgeschützten digitalen Zwilling in die Blockkette ein. Dies ermöglicht insbesondere die Konsistenz/Integrität der Daten besser zu überprüfen.

In einer weiteren Variante stellt ein Gerät eine Geräteattestierungsinformation bereit, d.h. eine mit einer zweiten (kryptographischen) Prüfsumme geschützte Geräteinformation und überträgt sie an den primären digitalen Zwilling. Diese Information kann dadurch nicht durch den primären digitalen Zwilling manipuliert werden.

Diese Geräteattestierungsinformation kann dem sicherheitsgeschützten digitalen Zwilling als Teil einer der Transaktion bereitgestellt werden. Sie kann in der Blockkette insbesondere nur dann als gültig erkannt werden, wenn die Attestierung kryptographisch gültig ist (z. B. die digitale Signatur erfolgreich bestätigt wurde).

Beispiele für Informationen bzw. Daten(sätze) eines sicherheitsgeschützten digitalen Zwillings sind:
- Aktueller Betriebsmodus des Gerätes (operational, standby, failure, service, sealed/unsealed)
- Aktuelle Konfiguration, Firmware-Stand (Identifizierungsinformation, z.B. ein Hash-Wert oder eine Konfigurations-Identifier)
- Wartungsinformation, Nutzungsinformation (Verbrauchsdaten)
- Selbsttestdaten
- Batteriestatus
- Geschätzte Restnutzungsdauer
- Zugehörigkeit zu Anlage (System, Group)

Die Fig. 2 zeigt ein zweites Ausführungsbeispiel der Erfindung das von einem System realisiert wird.

Im Einzelnen zeigt die Fig. 2 ein beispielhaftes System mit mehreren Geräten, beispielsweise ein erstes Gerät D1, ein zweites Gerät D2, ein drittes Gerät D3, ein viertes Gerät D4 und ein fünftes Gerät D5. Zusätzlich ist ein Gateway GW, ein Steuermodul (z. B. einem Internet Of Things-Backend/IoT-Backend) 210 zur Realisierung eines primären digitalen Zwillings, und mehrere (Blockketten-)Knoten (z. B. Bitcoin-Knoten oder Ethereum-Knoten), beispielsweise ein erster Knoten BCN1 und ein zweiter Knoten BCN2 dargestellt. Die Knoten, die Geräte, das Gateway GW und das IoT-Backend 210 sind über ein Netzwerk 250 (z. B. LAN, WAN oder das Internet) miteinander verbunden.

Das fünfte Gerät D5 sendet beispielsweise Gerätedaten 230, z. B. seine Überwachungsdaten (Device Monitoring Data) oder aktuelle Systemdaten (z. B. Informationen über Betriebstemperatur, Stromverbrauch) als Device-Status-Update-Nachricht zu seinem primären digitalen Zwilling im IoT-Backend 210 (z. B. über ein CoAP, MQTT, WebSocket, XMPP-Protokoll). Das IoT-Backend 210 bearbeitet die Information (Aktualisierung der Information des primären digitalen Zwillings z. B. durch Filterung, Verarbeitung).

Das IoT-Backend 210 prüft, ob die Gerätedaten zu dem ausgewählten Teil der Daten gehören, die durch den sicherheitsgeschützten digitalen Zwilling über die Blockkette bereitgestellt werden sollen. Ist dies der Fall, so generiert das IoT-Backend 210 abhängig von den Gerätedaten eine oder mehrere Transaktionen 235 und stellt sie den Knoten bereit. Diese tragen die Transaktion, bei erfolgreicher Validierung, in die Blockkette ein, beispielsweise indem ein Glied mit diesen Transaktionen mit einem Glied der Blockkette verkettet wird. Die Knoten bestätigen damit insbesondere die Transaktion in der Blockkette.

Die Fig. 2 zeigt weiterhin eine Variante, bei der das Gateway GW abhängig von den Gerätedaten des fünften Gerätes D5 eine oder mehrere Transaktionen 220 bildet und an dem zweiten Knoten BCN2 bereitstellt, der auf analoge Weise - wie vorhin erläutert - die Transaktionen in die Blockkette einfügt.

In einer weiteren Variante stellt das fünfte Gerät D5 selbst oder eines der anderen Geräte (z. B. D1-D4) abhängig von den Gerätedaten des fünften Gerätes D5 eine oder mehrere Transaktionen für die Knoten bereit. Der Knoten fügt die Transaktionen - wie oben bereits erläutert - auf analoge Weise in die Blockkette ein.

Vorzugsweise agieren das Gateway GW bzw. das IoT-Backend 210 als Knoten der Blockkette. Das bedeutet, dass sie sich an der Bildung bzw. Prüfung der Blockkette gemeinsam mit weiteren Knoten beteiligen.

Sind die anderen Geräte beispielsweise auch Knoten der Blockkette (z. B. das erste Gerät D1 und/oder das zweite Gerät D2) und haben aber keinen Zugriff auf das IoT-Backend 210 (z.B. nicht registriert oder keine Berechtigung) können diese anderen Geräte zumindest die in der Blockchain hinterlegte Information des fünften Gerätes D5 verwenden/abrufen. Sie können damit insbesondere die in der Blockchain manipulationsgeschützt hinterlegte Information nutzen, ohne auf den primären digitalen Zwilling zu haben. Dadurch können die Daten des sicherheitsgeschützten digitalen Zwillings beispielsweise flexibel durch unterschiedliche Stakeholder genutzt werden.

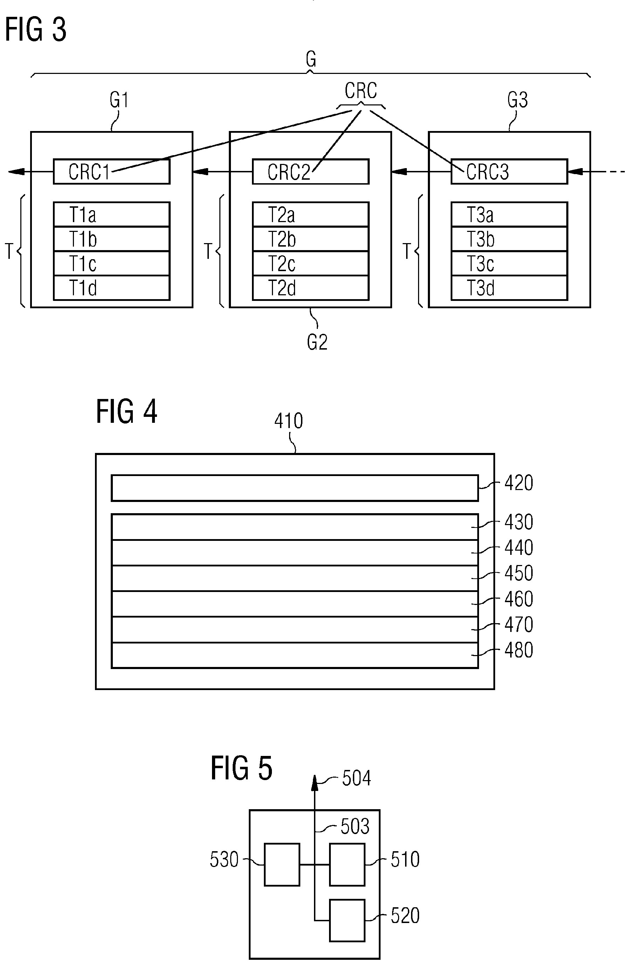

Die Fig. 3 zeigt ein drittes Ausführungsbeispiel der Erfindung, das eine Blockkette darstellt, die zur Realisierung der vorhergehenden Ausführungsbeispiele geeignet ist.

Im Einzelnen zeigt die Fig. 3 die Glieder G, beispielsweise ein erstes Glied G1, ein zweites Glied G2 und ein drittes Glied G3, einer Blockkette.

Die Glieder G umfassen jeweils mehrere Transaktionen T. Das erste Glied G1 umfasst beispielsweise eine erste Transaktion T1a, eine zweite Transaktion T1b, eine dritte Transaktion T1c und eine vierte Transaktion T1d. Das zweite Glied G2 umfasst beispielsweise eine fünfte Transaktion T2a, eine sechste Transaktion T2b, eine siebte Transaktion T2c und eine achte Transaktion T2d. Das dritte Glied G3 umfasst beispielsweise eine neunte Transaktion T3a, eine zehnte Transaktion T3b, eine elfte Transaktion T3c und eine zwölfte Transaktion T3d.

Die Glieder G umfassen jeweils zusätzlich noch eine Verkettungsprüfsumme CRC, die abhängig vom direkten Vorgänger-Glied gebildet wird. Somit umfasst das erste Glied G1 eine erste Verkettungsprüfsumme CRC1 von seinem Vorgänger-Glied, das zweite Glied G2 eine zweite Verkettungsprüfsumme CRC2 vom ersten Glied G1, und das dritte Glied G3 eine dritte Verkettungsprüfsumme CRC3 vom zweiten Glied G2. Die Verkettungsprüfsumme wird vorzugsweise über den Glied-Header des entsprechenden Vorgängergliedes gebildet. Die Verkettungsprüfsumme CRC kann vorzugsweise unter Verwendung einer kryptographischen Hash-Funktion wie z.B. SHA-256, KECCAK-256 oder SHA-3 gebildet werden.

Zusätzlich kann jedes der Glieder eine Transaktions-Prüfsumme umfassen. Diese kann mittels eines Hash-Baumes realisiert werden.

Um den Hash-Baum zu bilden, wird für jede Transaktion eines Gliedes eine dritte/weitere Prüfsumme (z. B. ebenfalls ein Hash-Wert, der abhängig von den Transaktionen/Transaktionsdatensätzen gebildet wird) berechnet. Üblicherweise wird ein Hash-Baum, z. B. ein Merkle Tree oder Patricia Tree, verwendet, dessen Wurzel-Hash-Wert/Wurzel-Prüfsumme vorzugsweise als Transaktions-Prüfsumme in dem jeweiligen Glied hinterlegt wird.

In einer Variante wird die Transaktions-Prüfsumme als Verkettungsprüfsumme verwendet.

Ein Glied kann weiterhin einen Zeitstempel, eine digitale Signatur, einen Proof-of-Work-Nachweis aufweisen, so wie es in den Ausführungsformen der Erfindung erläutert wurde.

Die Fig. 4 zeigt ein viertes Ausführungsbeispiel der Erfindung, bei der eine der Transaktionen aus Fig. 3, z. B. die erste Transkation T1b, genauer erläutert wird.

Im Einzelnen zeigt die Fig. 4 eine Transaktion 410 mit mehreren Datensätzen. Und zwar einen ersten Datensatz 420, einen zweiten Datensatz 430, einen vierten Datensatz 440, einen fünften Datensatz 450, einen sechsten Datensatz 460 und einen siebten Datensatz 470.

Der erste Datensatz 420 umfasst Identifizierungsdaten für das Gerät, auf das sich der sicherheitsgeschützte digitale Zwilling bezieht (MID: Siemens SiXY SN3175438). Der zweite Datensatz 430 umfasst eine Information über die Hardware-Version (z. B. 3.12a). Der dritte Datensatz 440 umfasst eine Information über die Firmware-Version (z. B. 17.12.6). Der vierte Datensatz 450 umfasst einen Identifizierer oder eine Unique ID der Konfiguration des Gerätes (z. B. Homag-XY41-V2a). Der fünfte Datensatz 460 umfasst eine Statusanzeige der Batterie des Gerätes (z. B. Batterie zu 70 % geladen). Der sechste Datensatz 470 umfasst eine Information über den Betriebsmodus des Gerätes (z. B. Service/Wartungs-Modus, Echtzeit-Modus, Arbeits-Modus). Der siebte Datensatz 480 umfasst einen Zeitstempel, der beispielsweise einen Erfassungszeitpunkt der Daten(sätze) angibt (z. B. 20161207-102237).

In ein Glied einer Blockchain, beispielsweise der Blockkette aus Fig. 3, wird vorzugsweise abhängig von der Transaktion eine Transaktions-Prüfsumme (z. B. ein Hashwert) ermittelt und eingetragen.

Die Transaktion bzw. deren Transaktions-Prüfsumme wird an einen Knoten übertragen. Bei der Bildung des nächsten Gliedes wird die Transaktionsinformation (z. B. die Transaktion und/oder die Transaktions-Prüfsumme) in das nächste Glied mit aufgenommen.

Dadurch ist zu späteren Zeitpunkten anhand des Gliedes der Blockkette die Information der Transaktion (also entsprechende Daten(sätze) des ausgewählte Teils der Daten, die in dem sicherheitsgeschützten digitalen Zwilling gespeichert sind) manipulationsgeschützt. Der sicherheitsgeschützte digitale Zwilling kann durch Dritte überprüft werden.

Insbesondere werden die Daten(sätze) der Transaktion abhängig von den Daten des primären digitalen Zwillings des Gerätes ermittelt (so wie dies in den vorhergehenden Ausführungsbeispielen bereits erläutert wurde).

Dies erfolgt vorzugsweise durch ein Steuermodul (z. B. dem IoT-Backend aus Fig. 2), d.h. durch den primären digitalen Zwilling selbst (bzw. durch das Computersystem, das den primären digitalen Zwilling realisiert bzw. die Daten(sätze) des primären digitalen Zwillings speichert).

Es ist jedoch auch möglich, dass dies auf einem Gateway oder anderen Systemkomponenten erfolgt oder auf dem Gerät selbst (z. B. dem fünften Gerät aus Fig. 2).

Die Fig. 5 zeigt ein fünftes Ausführungsbeispiel der Erfindung als Vorrichtung zum rechnergestützten Bereitstellen eines sicherheitsgeschützten digitalen Zwillings. Bei der Vorrichtung kann es sich beispielsweise um das IoT-Backend aus Fig. 2 handeln.

Die Vorrichtung umfasst ein Bereitstellungsmodul 510, ein Speichermodul 520, ein Erstellungsmodul 530 und eine optionale erste Kommunikationsschnittstelle 504 (z. B. zur Anbindung an das Netzwerk aus Fig. 2), die über einen ersten Bus 503 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 503 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das Bereitstellungsmodul 510 ist zum Bereitstellen zumindest eines ausgewählten Teils von Daten eines primären digitalen Zwillings eingerichtet.

Das Bereitstellungsmodul 510 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass der ausgewählte Teil der Daten bereitgestellt wird.

Das Speichermodul 520 ist zum Speichern von Transaktionen eingerichtet, wobei
- die Transaktionen den ausgewählten Teil der Daten umfassen und/oder
- erste Prüfsummen für den ausgewählten Teil der Daten berechnet werden und die Transaktionen die erste Prüfsummen umfassen;

Das Speichermodul 520 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Transaktionen gespeichert werden.

Das Erstellungsmodul 530 ist zum Erstellen des sicherheitsgeschützten digitalen Zwillings durch ein Erzeugen von Gliedern einer Blockkette eingerichtet, wobei die Glieder jeweils mindestens eine der Transaktionen umfassen und die Glieder miteinander zu der Blockkette verkettet werden.

Das Erstellungsmodul 530 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass der sicherheitsgeschützte digitale Zwilling erstellt wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001

## Patentansprüche

1. Verfahren zum rechnergestützten Erstellen eines sicherheitsgeschützten digitalen Zwillings mit folgenden Verfahrensschritten:
- Bereitstellen (110) zumindest eines ausgewählten Teils von Daten eines primären digitalen Zwillings;
- Speichern (120) von Transkationen, wobei
- die Transaktionen den ausgewählten Teil der Daten umfassen und/oder
- erste Prüfsummen für den ausgewählten Teil der Daten berechnet werden und die Transaktionen die erste Prüfsummen umfassen;
- Erstellen (130) des sicherheitsgeschützten digitalen Zwillings durch ein Erzeugen von Gliedern einer Blockkette, wobei
- die Glieder die Transkationen umfassen,
- die Glieder miteinander zur der Blockkette verkettet werden.

2. Verfahren nach Anspruch 1, wobei die Glieder über eine kryptographische Hashfunktion (H) miteinander verkettet werden.

3. Verfahren nach Anspruch 1 oder 2, wobei ein Datum der ausgewählten Daten, ein Teil der ausgewählten Daten oder alle ausgewählten Daten der Transaktionen jeweils aktualisiert werden, indem mit mindestens einem der anderen Glieder der Blockkette ein weiteres Glied mit mindestens einer weiteren Transkation mit entsprechend aktualisierten Daten verkettet wird.

4. Verfahren nach einem der vorhergehenden Ansprüche, wobei eine Integrität des primären digitalen Zwillings anhand des sicherheitsgeschützten digitalen Zwillings festgestellt wird.

5. Verfahren nach Anspruch 4, wobei eine Prüfung der Integrität durch den primären digitalen Zwilling selbst gesteuert wird und/oder durch Systemkomponenten gesteuert wird und/oder durch ein physikalisches Objekt gesteuert wird, das der primäre digitale Zwilling abbildet.

6. Verfahren nach einem der vorhergehenden Ansprüche, wobei
- ein physikalisches Objekt, das der primäre digitale Zwilling abbildet, eine Geräteattestierungsinformation an den primären digitalen Zwilling überträgt,
- der primäre digitale Zwilling die Geräteattestierungsinformation als erste weitere Transaktion eines ersten weiteren Gliedes in die Blockkette einfügt und dieses erste weitere Glied mit mindestens einem der anderen Gliedern der Blockkette verkettet wird.

7. Verfahren nach Anspruch 6, wobei die Geräteattestierungsinformation mit einer zweiten Prüfsumme geschützt wird und eine zweite weitere Transaktion eines zweiten weiteren Gliedes oder die erste weitere Transaktion die erste kryptographische Prüfsumme umfasst.

8. Vorrichtung zum rechnergestützten Erstellen eines sicherheitsgeschützten digitalen Zwillings aufweisend:
- ein Bereitstellungsmodul (510) zum Bereitstellen zumindest eines ausgewählten Teils von Daten eines primären digitalen Zwillings;
- ein Speichermodul (520) zum Speichern von Transkationen, wobei
- die Transaktionen den ausgewählten Teil der Daten umfassen und/oder
- erste Prüfsummen für den ausgewählten Teil der Daten berechnet werden und die Transaktionen die erste Prüfsummen umfassen;
- ein Erstellungsmodul (530) zum Erstellen des sicherheitsgeschützten digitalen Zwillings durch ein Erzeugen von Gliedern einer Blockkette, wobei
- die Glieder die Transkationen umfassen,
- die Glieder miteinander zur der Blockkette verkettet werden.

9. Vorrichtung nach Anspruch 8, wobei die Vorrichtung ein Übermittlungsmodul zum Übermitteln des sicherheitsgeschützten digitalen Zwillings aufweist.

10. Computerprogrammprodukt mit Programmbefehlen zur Durchführung der Verfahren nach einem der Ansprüche 1 - 7.

11. Computerprogrammprodukt mit Programmbefehlen für ein Erstellungsgerät, das mittels der Programmbefehle konfiguriert wird, eine Vorrichtung nach Anspruch 8 oder 9 zu erstellen.

12. Bereitstellungsvorrichtung für das Computerprogrammprodukt nach Anspruch 10 und/oder 11, wobei die Bereitstellungsvorrichtung das Computerprogrammprodukt speichert und/oder bereitstellt.
